# EUROPÄISCHE PATENTSCHRIFT

(11) **EP 2 504 123 B1**
(45) Veröffentlichungstag und Bekanntmachung des Hinweises auf die Patenterteilung: **04.12.2013**
(21) Anmeldenummer: 10772951.9
(22) Anmeldetag: 13.10.2010
(51) Int. Cl.: B23P 15/40, B21H 7/10, B27L 11/00

(54) **VERFAHREN ZUR HERSTELLUNG VON WENDEMESSERN**
METHOD FOR PRODUCING REVERSIBLE BLADES
PROCÉDÉ DE FABRICATION DE LAMES RÉVERSIBLES

(30) Priorität: 27.11.2009 AT 18922009
(43) Veröffentlichungstag der Anmeldung: 03.10.2012
(73) Patentinhaber: Böhler Ybbstal Profil GmbH, 3333 Böhlerwerk (AT)
(72) Erfinder: MAISSER, Helmut, A-3365 Allhartsberg (AT); PONEMAYR, Helmut, A-3365 Allhartsberg (AT)
(74) Vertreter: Wildhack & Jellinek
(86) Internationale Anmeldenummer: PCT/AT2010/000392
(87) Internationale Veröffentlichungsnummer: WO 2011/063435

(56) Entgegenhaltungen:
- EP-A2- 0 271 481
- EP-A2- 1 920 875
- EP-A2- 2 006 047
- AT-B- 398 401
- DE-A1- 2 533 471
- DE-A1- 2 704 999
- US-A1- 2009 217 794

## Beschreibung

Die Erfindung bezieht sich auf ein Verfahren zur Herstellung von Wendemessern mit profiliertem Querschnitt, insbesondere für einen Einsatz in Hackmaschinen zur Holzzerspanung, bestehend im Querschnitt aus einem proximalen Trägerteil mit mindestens einem Passmittel zur lösbaren, verschiebungssicheren Befestigung des Messers und beidseitig am Trägerteil einem distalen, die Schneidkanten beinhaltenden Spanungsbereich, wobei ein Vormaterial mit großer Längserstreckung einer Oberflächenbearbeitung unterworfen und daraus durch Walzen ein Trägerprofil gebildet wird.

Wendemesser der oben beschriebenen Art in unterschiedlichen Ausgestaltungen zählen zum Stand der Technik. Die Ausgestaltungen stellen zumeist vorteilhafte, wirtschaftliche und/oder technische Innovationen im Hinblick auf ein besonderes Eigenschaftsprofil der Messer dar.

Die EP 0 271 481 A beispielsweise offenbart ein Verfahren zur Herstellung von insbesondere Maschinenmesser aus warmgewalztem Flachstahl, wobei im Wesentlichen an der Seitenfläche durch Überfüllung des letzten Kalibers eine Walzfahne mit homogener Materialstruktur im Schneidkantenbereich gebildet wird.

Aus der DE-OS-27 04 999 ist ein Verfahren zur Herstellung von Bandstahlmessem im kontinuierlichen Durchzug bekannt geworden, wobei das Band mit einer zentrischen Feder oder Nut versehen wird und das Band an dieser Feder oder Nut durch die folgenden Arbeitszonen geführt wird.

Ein Wendemesser, welches in einem Messerträger durch passungsgemäß zusammenwirkende Vorsprünge bzw. Vertiefungen in einer vorgesehenen Position einsetzbar ist und zwei im Querschnitt distale aufgeschweißte Arbeitsteile mit Schneiden aus hochlegiertem Werkzeugstahl aufweisen, offenbart das Dokument AT 398 401 B. Dieses Dokument bildet den nächstliegenden Stand der Technik und offenbart die Merkmale des Oberbegriffs des Anspruchs 1.

Flachstahlmesser mit gegebenenfalls zur Befestigung aufgestauchtem Rücken- oder gebogenem Endteil, welches dem aus Werkzeugstahl gebildeten Schneidteil mit einer Schneidkante gegenüberliegend positioniert ist, sind aus der US 2009/021 7794 A1 bekannt.

Wendemesser der genannten Art haben wirtschaftliche Nachteile durch eine aufwändige Herstellweise und/oder Nachteile einer unzureichenden Produktgüte bzw. eines Fehlens von einzelnen gewünschten Gebrauchseigenschaften.

Die Erfindung setzt sich nun zum Ziel, ein gattungsgemäßes Verfahren zur Herstellung von Wendemessern anzugeben, mittels welchen wirtschaftlich deren Eigenschaftsprofil auch bei harten Einsatzbeanspruchungen optimiert ist.

Dieses Ziel wird bei einem Verfahren der eingangsgenannten Art dadurch erreicht, dass die distalen Bereiche des in einem überfüllten Walzkaliber verformten, eine große Längserstreckung aufweisenden Trägerteiles im Durchlauf unter Bildung jeweils einer Verbindungsfläche axsymmetrisch in Längsrichtung abgetragen werden, wonach an diesen bearbeiteten Flächen des Trägerteiles je ein Ansatzteil aus Werkzeugstahl mittels metallischer Bindung befestigt wird, und aus den Ansatzteilen durch spanabhebende Bearbeitung Spanungsbereiche mit je einem Schneidenbereich und einer Schneidkante ausgeformt werden, an welchen Kantenbereichen eine thermische Werkstoffvergütung und anschließend ein Ablängen zu einsatzbereiten Wendemessern erfolgen.

Die mit dem erfindungsgemäßen Verfahren erreichten Vorteile sind im Wesentlichen darin begründet, dass aus dem Vormaterial durch Walzen in einem überfüllten Kaliber gleichzeitig proximale Passmittel und distale Bereiche des Trägerteiles gebildet werden, welche distalen Teile weit zur Längsachse hin eine kaltverformte, im Wesentlichen ungerichtete Struktur und dadurch eine bevorzugte Verfestigung des Werkstoffes aufweisen. Diese distalen und teilweise aus dem Kaliber ausgepressten verfestigten Teile werden im Wesentlichen bei Raumtemperatur abgetragen und eine ebene Fläche gebildet, wobei sichergestellt ist, dass die durch Kaltverformung erreichte Festigkeit des Materials im Flächenbereich erhalten bleibt.

An die derart gebildeten Flächen des Trägerteiles werden Ansatzteile aus Werkzeugstahl metallisch angebunden, wobei die Verbindung bzw. Verschweißung hochenergetisch, also ohne nachteilige Tiefenwirkung erfolgt. Derart wird nur ein unwesentlicher Festigkeitsabbau des Werkstoffes des kaltverfestigten Trägerteiles im Verbindungsbereich erreicht, was eine gewünschte hohe mechanische Stabilität einer Festlegung des Ansatzteiles bewirkt.

Mittels spanender Bearbeitung, gegebenenfalls in Kombination mit teilweiser Kaltumformung erfolgt jeweils am Ansatzteil eine Ausformung eines Spanungsbereichs mit einer Schneidkante, wobei eine hochfeste Bindung mit dem Trägerteil erhalten bleibt.

Eine thermische Werkstoffvergütung des Kantenbereiches ist dabei derart vorgesehen, dass keine Wärmebeeinflussung der Zone mit der metallischen Bindung bzw. zusatzwerkstofffreien Verschweißung am Ansatzteil erfolgt.
In einfacher Weise kann nun ein endgültiges Schärfen der Schneide und ein Ablängen der Messer erfolgen.

Bei einer Ausgestaltung der Erfindung ist es von Vorteil, wenn das Vormaterial mit großer Längserstreckung nach einer abmessungsgenauen Bearbeitung von dessen Oberfläche und vor einem Walzen zu einem Trägerteil einer Schnellerwärmung in einem Zeitraum von weniger als 50 sec., insbesondere von weniger als 15 sec., vorzugsweise mittels Induktionserwärmung, im Durchlauf auf eine Temperatur von weniger als 900°C mit der Maßgabe, dass das Gefüge des Werkstoffes in einer kubisch-raumzentrierten Atomstruktur verbleibt, gewärmt wird. Derart erfolgt durch eine unmittelbar vorgeordnete abmessungsgenaue Bearbeitung der Oberfläche eine exakte Dimensionierung des Vormaterials und somit eine Präzisierung der Abmessungen des Walzproduktes einerseits und andererseits eine hochwertige zunderfreie Oberflächenqualität des Trägerprofiles, insbesondere der Anliegeflächen des Passmittels. Zur Vermeidung einer nachteiligen Oxidbildung ist es von Vorteil für das Vormaterial, eine Schnellerwärmung in einem Zeitraum von weniger als 50 sec. vorzusehen, welche Erwärmung vorzugsweise durch Induktion im Durchlauf erfolgt. Eine Maximaltemperatur für eine Umformung des Vormaterials wird durch die chemische Zusammensetzung bzw. durch den Kohlenstoffgehalt des Werkstoffes bestimmt. Für eine Kaltverfestigung des Materials bei der Umformung ist allenfalls eine Temperatur erforderlich, bei welcher eine Rekristallisation des Gefüges vermieden und somit eine Formgebung des Teils im Temperaturbereich mit kubischraumzentrierter Atomstruktur erfolgt

Um günstige Bedingungen für ein Verbinden der Ansatzteile durch zusatzwerkstofffreies Schmelzschweißen mit geringer wärmebeeinflussten Zone zu erreichen, kann es im Hinblick auf eine gute Haftfestigkeit und eine präzise Kontinuität über die Längserstreckung vorteilhaft sein, wenn vom verformten Trägerteil bei dessen Führung durch die Passmittel im Durchlauf axsymmetrisch distale Bereiche unter Bildung von bearbeiteten ebenen Flächen abgetragen werden, wobei die Breite der Flächen mehr als 0.9 mm, jedoch weniger als 2.9 mm, beträgt.

Dabei ist es verbindungstechnisch günstig, wenn bei einer Verbringung in Längsachsrichtung und bei Führung des Trägerteiles durch die Passmittel dieses mit Ansatzteilen aus Werkzeugstahl mit einer Dicke von mehr als 0,9 mm, jedoch weniger als 2,9 mm, und einer Breite von 1.0 mm bis 4 mm metallisch durch zusatzwerkstofffreies Verschmelzen, insbesondere mittels Laserschweißens, festgelegt wird.

Mit Vorteil ist dabei der Kohlenstoffgehalt des zumeist niedrig legierten Trägerteiles auf die legierungstechnisch begründete Kohlenstoffaktivität der Ansatzteile auszurichten, um eine Kohlenstoffdiffusion zum hochlegierten Werkzeugstahl hin und damit eine Gefahr einer Bildung eines spröden Bereiches in der Schweißzone gering bzw. unwirksam zu halten.

Wenn die Ansatzteile am Trägerteil durch spanabhebende und/oder durch spanlose Umformung zu im Querschnitt im Wesentlichen dreieckigen Spanungsbereichen mit Schneidkanten weitergebildet werden, können in günstiger Weise die mechanischen Spannungen im Bereich der Verbindungszone minimiert und die Materialfestigkeit in dieser erhöht werden.

Mit Vorteil werden die Schneidenbereiche mit den Schneidkanten am Spanungsteil nach einer spanenden Endbearbeitung zur axsymmetrischen genauen Darstellung der Schneidkanten im Durchlauf einer thermischen Werkstoffvergütung durch Härten und Anlassen des Schneidenbereiches aus Werkzeugstahl unterworfen. Derart können gewünschte Eigenschaften und Härtewerte der Schneidenbereiche im Hinblick auf das Einsatzgebiet der Messer eingestellt werden. Allerdings ist es dabei erforderlich, die Werkstoffvergütung des Werkzeugstahies auf den Schneidenbereich zu beschränken und eine nachteilige Ewärmung des Spanteiles im Bereich der Schweißnaht allenfalls zu vermeiden, weil eine Verspödung in diesem zu einem Bruch der metallischen Bindung führen kann.

Aus wirtschaftlichen Gründen kann es günstig sein, wenn gegebenenfalls aus einem Zwischenlager ein Trägerteil mit großer Längserstreckung nach Ausformung der distalen Spanungs- und Schneidenbereiche und einer thermischen Vergütung der Bereiche mit den zugerichteten Schneidkanten abgelängt und zu einsatzbereiten Wendemessern endgebildet wird.

An Hand von Zeichnungen, welche einen Fertigungsablauf von Messern veranschaulichen sollen, und von Ausführungsbeispielen, welche lediglich einen Ausführungsweg darstellen, wird die Erfindung in der Folge näher beschrieben.

Die graphischen Darstellungen zeigen
Fig. 1 Vormaterial
Fig. 2 verformtes Trägerteil
Fig. 3 bearbeitetesTrägerteil
Fig. 4 Trägerteil mit Ansatzteil
Fig. 5 Trägerteil mit Spanungsbereich
Fig. 6 Wendemesser

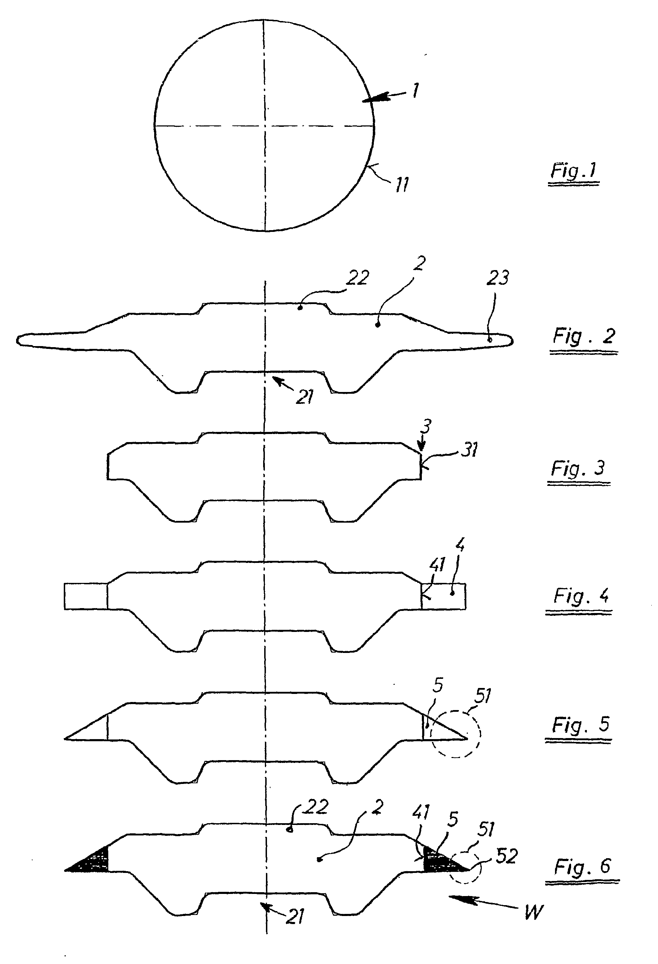

Fig. 1 zeigt ein zylindrisches Vormaterial 1 mit einer bearbeiteten Oberfläche 11 mit einer Rautiefe R_{y}, (R_{z} ISO) kleiner 45 µm.

Fig. 2 stellt ein mittels Walzens bei überfütltem Kaliber ausgeformtes Trägerprofil 2 dar, welches in den distalen Bereichen jeweils eine Walzfahne 23 aufweist. Bei einem Walzen sind gleichzeitig Passmittel 21, 22 mit konkaver 21 und konvexer 22 Form proximal in den Trägerkörper 2 eingebracht worden.

Fig. 3 vermittelt schematisch einen durch Abtrennung 3 von den distalen Walzfahnen 23 erstellten und mit bearbeiteten Flächen 3 versehenen Trägerprofilkörper.

Fig. 4 zeigt in prinzipieller Veranschaulichung jeweils ein am Trägerteil 2 angebrachtes Ansatzteil 4, wobei eine metallische Bindung 41 der Teile 2,4 durch zusatzwerkstofffreies Verschmelzen, insbesondere mittels Laserschweißens) erfolgte.

Fig. 5 zeigt jeweils ein durch Bearbeitung eines Ansatzteiles 4 gebildetes Spanteil 5 mit einem von einer Bindung bzw. einer Schweißnaht 41 distanziertem Schneidenbereich 51.

Fig. 6 vermittelt schematisch ein auf Maß abgelängtes Messer W umfassend ein Trägerteil 2 mit proximal positionierten Passmitteln 21, 22 bestehend aus einem in Messerachslängsrichtung ausgeformten konkaven Einzug 21 und einen gegenüberliegenden konvexen Vorsprung 22 mit am Trägerteil 2 distal durch metallische Bindung 41 unlösbar befestigten Ansatzteilen 4, die zu Spanteilen 5 weitergebildet sind und thermisch vergütete Schneidenbereiche 51 mit Schneidkanten 52 aufweisen.

Mittels praktischer Versuche wurden sogenannte "Trimetall"-Wendemesser aus einem aus Kohlenstoffstahl gebildeten Trägerteil 2 und einem aus einer im Schneidenbereich auf eine Härte von 67 HRC vergüteten Schnellstahllegierung EN/DIN-Werkstoff Nr. 1.3247 bzw. AISI-M42 bestehenden Spanteil 5 untersucht und praktisch in einem harten Schneideinsatz erprobt.

Untersuchungsergebnisse zeigten, dass über einem bestimmten Kohlenstoffgehalt des Trägerteil 2-Werkstoffes temperatur- und zeitabhängig eine Kohlenstoffdiffusion zum Werkzeugstahlteil hin im Verbindungsbereich 41 erfolgen kann, wodurch in der Schweißnaht gebildete Sprödbereiche ein Ausbrechen der Spanteile 5 bewirken können.

Trägerteile 2 aus Kohlenstoffstählen mit einer niedrigen C-Konzentraüon von unter 0.35 Gew.-% zeigten diese Gefahr in wesentlich geringerem Ausmaß, wobei eine vorherige, durch Kaltverformung bei einer Temperatur im Alpha-Bereich der Legierung bewirkte Verfestigung des Werkstoffes auch nach einem Anschweißen eines Ansatzteiles 4 ausreichende hohe Zähigkeits- und Festigkeitseigenschaften für extreme Beanspruchungen der Messer erbringt.

## Patentansprüche

1. Verfahren zur Herstellung von Wendemessern (W) mit profiliertem Querschnitt, insbesondere für einen Einsatz in Hackmaschinen zur Holzzerspanung, bestehend im Querschnitt aus einem proximalen Trägerteil (2) mit mindestens einem Passmittel (21,22) zur lösbaren, verschiebungssicheren Befestigung des Messers (W) und beidseitig am Trägerteil (2) einem distalen, die Schneidkanten (52) beinhaltenden Spanungsbereich (5), wobei ein Vormaterial (1) mit großer Längserstreckung einer Oberflächenbearbeitung (11) unterworfen und daraus durch Walzen ein Trägerprofil (2) gebildet wird, **dadurch gekennzeichnet, dass** die distalen Bereiche (23) des in einem überfüllten Walzkaliber verformten, eine große Längserstreckung aufweisenden Trägerteiles (2) im Durchlauf unter Bildung jeweils einer Verbindungsfläche (31) achssymmetrisch in Längsrichtung abgetragen werden, wonach an diesen bearbeiteten Flächen (31) des Trägerteiles (2) je ein Ansatzteil (4) aus Werkzeugstahl mittels metallischer Bindung (41) befestigt wird, und aus den Ansatzteilen (4) durch spanabhebende Bearbeitung und/oder Kaltverformung Spanungsbereiche (5) mit je einem Schneidenbereich (51) und einer Schneidkante (52) ausgeformt werden, an welchen Kantenbereichen (5) eine thermische Werkstoffvergütung und anschließend ein Ablängen zu einsatzbereiten Wendemessern (W) erfolgen.

2. Verfahren nach Anspruch 1, **dadurch gekennzeichnet, dass** das Vormaterial (1) mit großer Längserstreckung nach einer abmessungsgenauen Bearbeitung von dessen Oberfläche und vor einem Walzen zu einem Trägerprofil (2) einer Schnellerwärmung in einem Zeitraum von weniger als 50 sec., insbesondere von weniger als 15 sec., vorzugsweise mittels Induktionserwärmung, im Durchlauf auf eine Temperatur von weniger als 900°C, mit der Maßgabe, dass das Gefüge des Werkstoffes in einer kubisch-raumzentrierten Atomstruktur verbleibt, gewärmt wird.

3. Verfahren nach einem der Ansprüche 1 oder 2, **dadurch gekennzeichnet, dass** vom verformten Trägerteil (2) bei dessen Führung durch die Passmittel (21,22) im Durchlauf axsymmetrisch distale Bereiche unter Bildung von bearbeiteten ebenen Flächen (31) abgetragen werden, wobei die Breite der Flächen mehr als 0,9 mm, jedoch weniger als 2,9 mm, beträgt.

4. Verfahren nach einem der Ansprüche 1 bis 3, **dadurch gekennzeichnet, dass** bei einer Verbringung in Längsachsrichtung und bei Führung des Trägerteiles (2) durch die Passmittel (21,22) dieses mit Ansatzteilen (4) mit einer Dicke von mehr als 0,9 mm, jedoch weniger als 2,9 mm, und einer Breite von 1,0 mm bis 4 mm metallisch, vorzugsweise durch zusatzwerkstofffreies Verschmelzen, insbesondere mittels Laserschweißens, verbunden wird.

5. Verfahren nach einem der Ansprüche 1 bis 4, **dadurch gekennzeichnet, dass** die Ansatzteile (4) durch spanabhebende und/oder durch spanlose Umformung zu im Querschnitt im Wesentlichen dreieckigen Spanungsbereichen (5) mit Schneidkanten (52) weitergebildet werden.

6. Verfahren nach einem der Ansprüche 1 bis 5, **dadurch gekennzeichnet, dass** die Schneidenbereiche (51) mit den Schneidkanten (52) am Spanungsbereich (5) des Trägerteiles (2) nach einer spanenden Endbearbeitung zur axsymmetrischen Darstellung der Schneidkanten (52) im Durchlauf einer thermischen Werkstoffvergütung durch Härten und Anlassen des Schneidenbereiches (51) aus Werkzeugstahl unterworfen wird.

7. Verfahren nach einem der Ansprüche 1 bis 6, **dadurch gekennzeichnet, dass** ein Trägerteil (2) mit großer Längserstreckung nach Ausformung der distalen Spanungs- und Schneidenbereiche (5,51) und einer thermischen Vergütung der zugerichteten Schneidkanten (52) abgelängt und zu einsatzbereiten Wendemessern endgebildet wird.

## Claims

1. A method for producing reversible blades (W) comprising profiled cross-sections, in particular for the use in chippers for splitting wood, in their cross-section consisting of a proximal carrier part (2) having at least one fitting means (21,22) for releasable and displacement-proof fastening of the blade (W) and distal chipping regions (5) on both sides of the carrier part (2) comprising cutting edges (52), wherein a starting material (1) having a large longitudinal extension is subjected to surface working (11) and formed into a carrier profile (2) by rolling, **characterized in that** the distal regions (23) of the carrier part (2) deformed in an overfilled reduction roll and having a large longitudinal extension are removed axially symmetrically in the longitudinal direction during passage with the formation of a connection surface (31) on each side, whereafter one extension part (4) of tool steel is attached to each of the connection surfaces (31) of the carrier part (2) by means of metallic bond (41) and chipping regions (5) each having a blade region (51) and a cutting edge (52) are formed from the extension parts (4) by metal cutting and/or cold working, at which edge regions (5) the material is heat treated and subsequently the length is cut to form reversible blades (W) ready for use.

2. The method according to claim 1, **characterized in that** after dimension-accurate working of its surface and before rolling to a carrier profile (2), the starting material (1) with a large longitudinal extension is subjected to rapid heating to a temperature of less than 900 °C within a period of less than 50 seconds, in particular less than 15 seconds, preferably by means of induction heating during passage, provided that the structure of the material remains a body-centered cubic atomic structure.

3. The method according to any one of the claims 1 or 2, **characterized in that** distal regions are removed axially symmetrically from the deformed carrier part (2) which is guided by the fitting means (21, 22) during passage so that worked flat surfaces (31) are formed, wherein the width of the surfaces is more than 0.9 mm but less than 2.9 mm.

4. The method according to any one of the claims 1 to 3, **characterized In that** the carrier part (2) is, while being moved in the longitudinal axial direction and guided by the fitting means (21, 22), metallically bonded, preferably by fusing together without any weld metal, in particular by laser welding, with extension parts (4) with a thickness of more than 0.9 mm but less than 2.9 mm and a width of 1.0 mm to 4 mm.

5. The method according to any one of the claims 1 to 4, **characterized in that** the extension parts (4) are further formed by metal cutting and/or non-cutting forming into the chipping regions (5) with a substantially triangular cross-section having cutting edges (52).

6. The method according to any one of the claims 1 to 5, **characterized in that** the blade regions (51) with the cutting edges (52) at the chipping regions (5) of the carrier part (2) are, after metal-cutting final working for the axially symmetrical provision of the cutting edges (52), subjected to a heat treatment during passage by hardening and annealing of the blade region (51) made of tool steel.

7. The method according to any one of the claims 1 to 6, **characterized in that** a carrier part (2) with a large longitudinal extension is, after formation of the distal cut and blade regions (5,51) and heat treatment of the finished cutting edges (52), cut into appropriate length and finished to provide reversible blades ready for use.

## Revendications

1. Procédé pour produire des couteaux (W) réversibles comprenant une section profilé, notamment pour l'utilisation dans des déchiqueteuses pour le déchiquetage de bois, composés dans leur section d'un élément (2) de support proximal avec au moins un moyen (21, 22) d'ajustement pour attacher le couteau (W) de manière amovible et en assurant son non-déplacement, ainsi que de régions (5) distales de déchiquetage des deux côtés de l'élément (2) de support, comprenant des arêtes (52) de coupe, un matériau (1) brut très long étant exposé à un traitement (11) de surface pour obtenir par laminage un profil (2) de support, **caractérisé en ce que** les régions (23) distales de l'élément (2) de support très long, déformé dans un cylindre de réduction surchargé, sont emportées de façon axialement symétrique dans le sens longitudinal en continu en formant respectivement une surface (31) de ralliement, après quoi respectivement une pièce (4) d'attache en acier à outils est attachée par liaison (41) métallique auxdites surfaces (31) de ralliement traitées de l'élément (2) de support et des régions (5) de déchiquetage sont formées à partir desdites pièces (4) d'attache par enlèvement de matière et/ou forgeage à froid, lesdites régions (5) de rebord présentant une région (51) de coupe et une arête (52) de coupe, dont les régions (5) de rebord sont exposées à un traitement thermique et après à tronçonnage pour obtenir des couteaux (W) réversibles prêts à l'usage.

2. Procédé selon la revendication 1, **caractérisé en ce que**, après un traitement à précision dimensionnelle de sa surface et avant d'être laminé pour obtenir un profil (2) de support, ledit matériau (1) brut très long est réchauffé par réchauffement rapide en continu à une température de moins de 900 °C dans un laps de temps de moins de 50 secondes, notamment en moins de 15 secondes, de préférence par réchauffement à induction, à condition que la texture du matériau garde une structure atomique cubique centrée.

3. Procédé selon une des revendications 1 ou 2, **caractérisé en ce que** des régions distales axialement symétriques sont emportées de l'élément (2) de support déformé lors de son passage à travers les moyens (21, 22) d'ajustement pour former de surfaces (31) planes traitées, la largeur des surfaces étant de plus de 0,9 mm, mais moins de 2,9 mm.

4. Procédé selon une des revendications 1 à 3, **caractérisé en ce que** l'élément (2) de support lors de son déplacement en direction axiale longitudinale et de son passage à travers les moyens (21, 22) d'ajustement est relié métalliquement, de préférence par fusion sans matériaux additifs, notamment par soudage à laser, avec des pièces (4) d'attache comportant une épaisseur de plus de 0,9 mm, mais moins de 2,9 mm, et une largeur d'1, 0 mm à 4 mm.

5. Procédé selon une des revendications 1 à 4, **caractérisé en ce que** les pièces (4) d'attache sont travaillées ultérieurement par déformation par enlèvement et/ou sans enlèvement de matière pour obtenir des régions (5) d'enlèvement, présentant une section essentiellement triangulaire, avec des arêtes (52) de coupe.

6. Procédé selon une des revendications 1 à 5, **caractérisé en ce que** les régions (51) de coupe avec les arêtes (52) de coupe dans la région (5) d'enlèvement de l'élément (2) de support sont exposées, après un traitement final par enlèvement pour obtenir des arêtes (52) de coupe axialement symétriques, à un traitement thermique par trempe et revenu de la région (51) de coupe en acier à outils.

7. Procédé selon une des revendications 1 à 6, **caractérisé en ce que** un élément (2) de support très long est, après la formation desdits régions (5, 51) d'enlèvement et de coupe et traitement thermique des arêtes (52) de coupe préparées, tronçonné et formé pour obtenir des couteaux réversibles prêts à l'usage.
